# FASCICULE DE BREVET EUROPEEN

(11) **EP 0 394 132 B1**
(45) Date de publication et mention de la délivrance du brevet: **10.03.1993**
(21) Numéro de dépôt: 90401061.8
(22) Date de dépôt: 19.04.1990
(51) Int. Cl.: B27G 19/06, B23Q 11/08

(54) **Scie à ruban comprenant un dispositif de réglage et de protection**
Bandsäge mit Regel- und Schutzvorrichtung
Bandsaw with means of adjustment and protection

(30) Priorité: 21.04.1989 FR 8905339
(43) Date de publication de la demande: 24.10.1990
(73) Titulaire: I.N.R.S. - INST. NAT. DE RECHERCHE ET DE SECURITE POUR LA PREVENTION DES ACCIDENTS DU TRAVAIL ET DES MALADIES PROFESSIONNELLES, 75680 Paris Cédex 14 (FR)
(72) Inventeur: L'Huillier, Jean-Claude, F-54420 Pulnoy (FR)
(74) Mandataire: Bouju, André

(56) Documents cités:
- DE-A- 3 223 281
- FR-A- 1 083 448
- FR-A- 2 243 793
- FR-A- 2 460 190
- GB-A- 29 559
- GB-A- 806 612
- GB-A- 2 162 461
- US-A- 3 104 688
- US-A- 3 939 749
- US-A- 3 974 724

## Description

La présente invention concerne une scie à ruban conforme au préambule de la revendication 1.

Une telle scie à ruban est décrite dans le FR-A-1 083 448.

Dans certaines scies à ruban connues, le dispositif de réglage précité comprend un guide-lame qui entoure le ruban. La distance comprise entre ce guide-lame et la table de la scie est réglée en fonction de l'épaisseur de la pièce à scier.

Un dispositif de verrouillage permet à l'utilisateur de bloquer le guide-lame à la bonne hauteur.

Toutefois, certains utilisateurs ne prennent pas la précaution d'ajuster la hauteur du guide-lame pour chaque épaisseur de pièce à scier et laissent ainsi ce guide-lame à une hauteur dépassant largement l'épaisseur de la pièce. Ainsi, il subsiste au-dessus de la pièce à scier, un espace où le ruban de la scie n'est pas protégé, de sorte que l'utilisateur risque d'être gravement blessé, notamment aux mains.

Le but de la présente invention est de remédier aux inconvénients des réalisations connues précitées en créant une scie à ruban qui apporte une protection efficace aux utilisateurs et ce, sans que cette protection constitue une gêne ou une contrainte pour les utilisateurs.

Ce but est atteint, selon l'invention, avec une scie à ruban présentant les caractéristiques énoncées dans la partie caractérisante de la revendication 1.

Ainsi, pour ajuster la hauteur du dispositif en fonction de l'épaisseur de la pièce de bois à scier, il suffit à l'utilisateur d'actionner un levier.

Etant donné que pour toute position de ce levier, la hauteur du dispositif de réglage et de protection reste stable - ce qui veut dire que l'utilisateur n'a pas à verrouiller le dispositif à chaque position - le réglage du dispositif n'engendre aucune contrainte. Ainsi, l'utilisateur n'est pas dissuadé par la mise en oeuvre du dispositif de protection et sera au contraire, incité à le mettre en oeuvre à chaque fois pour toutes les épaisseurs de pièces à scier.

Selon une version avantageuse de l'invention, lesdits moyens comprennent un ressort de compensation de la masse des parties mobiles du dispositif de réglage et de protection et des organes coopérant avec friction lors du déplacement du levier.

Le ressort de compensation soulage considérablement les efforts nécessaires à l'utilisateur pour faire coulisser le dispositif de réglage et de protection, tandis que les organes à friction maintenant ce dispositif stable en toute position.

Selon une version préférée de l'invention, le dispositif de réglage et de protection comprend dans sa partie dirigée vers l'utilisateur, un capot transparent. Ce capot transparent permet à l'utilisateur de voir le ruban de la scie qu'il protège, ainsi que la pièce de bois dans la zone de travail du ruban, ce qui permet à l'utilisateur de réaliser un travail précis sans être gêné par la présence du dispositif de réglage et de protection.

De préférence, le dispositif de réglage et de protection est surmonté par une série de fourreaux entourant le ruban et pouvant coulisser les uns dans les autres lors du coulissement du dispositif.

Ces fourreaux télescopiques assurent une protection totale dans la zone du ruban située au-dessus du dispositif de réglage et de protection proprement dit.

De préférence également, la colonne de guidage du coulissement du dispositif de réglage et de protection et les organes de transmission du mouvement du levier pour faire coulisser le dispositif sont situés derrière le ruban relativement au côté où se trouve l'utilisateur de la scie.

Ainsi, le dispositif selon l'invention ne constitue aucune gêne pour l'utilisateur de la scie.

D'autres particularités et avantages de l'invention apparaîtront encore dans la description ci-après.

Aux dessins annexés donnés à titre d'exemples non limitatifs :
- la figure 1 est une vue en perspective partielle d'une scie à ruban conforme à l'invention, équipée d'un dispositif de réglage et de protection,
- la figure 2 est une vue en élévation avec arrachements du dispositif de réglage et de protection,
- la figure 3 est une vue de dessus du dispositif de réglage et de protection.

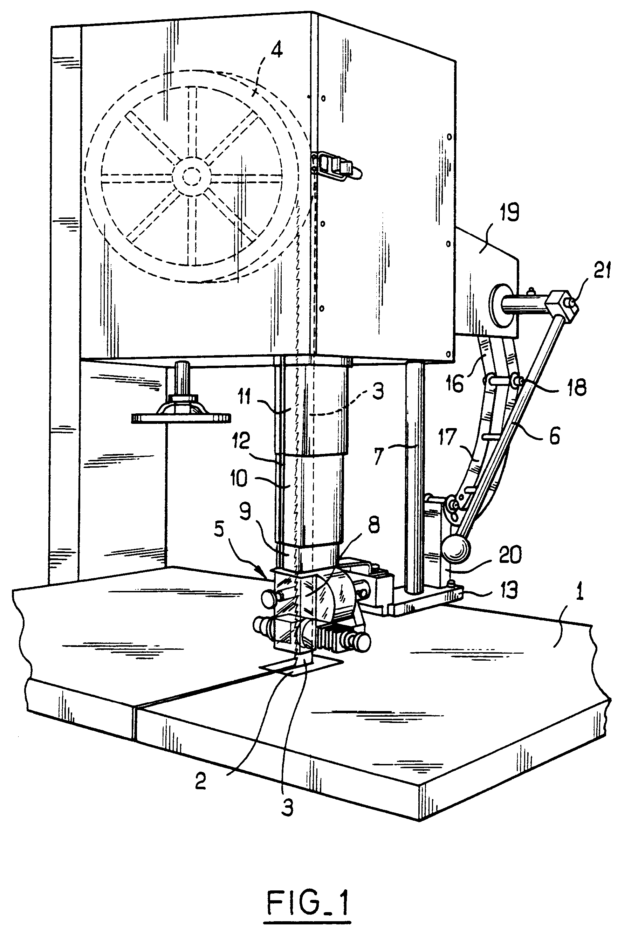

Dans la réalisation de la figure 1, la scie à ruban comprend une table 1 munie d'une fente 2 dans laquelle le ruban 3 de la scie montée sur une roue supérieure 4 et une roue inférieure (non représentée) se déplace perpendiculairement à la surface de la table 1. Un dispositif 5 à régler à l'épaisseur de la pièce à scier, est monté autour du ruban pour pouvoir coulisser perpendiculairement à la table 1.

Conformément à l'invention, le dispositif 5 entoure complètement le ruban 3 pour assurer la protection de l'utilisateur.

Le coulissement du dispositif 5 est commandé par un levier pivotant 6 actionnable par l'utilisateur, ce coulissement étant guidé par une colonne 7 perpendiculaire à la table 1 et parallèle au ruban 3. Des moyens qui seront décrits plus loin sont prévus pour maintenir le dispositif 5 de réglage et de protection en position stable en toute position par rapport à la table 1, déterminée par le levier 6 actionné par l'utilisateur.

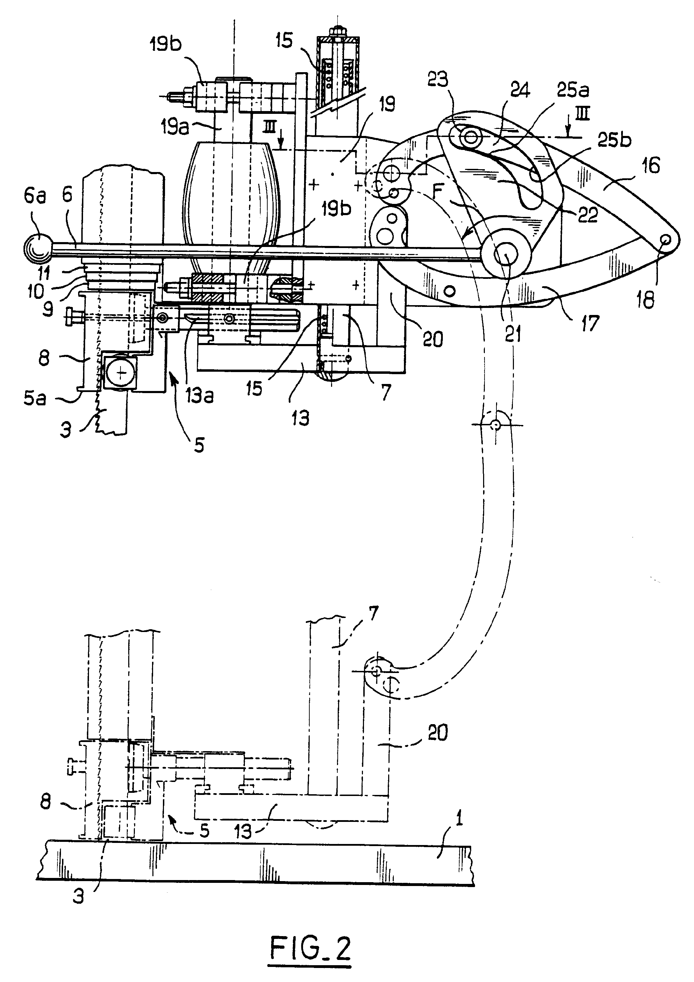

On voit sur les figures 1 et 2, que le dispositif 5 de réglage et de protection comprend dans sa partie dirigée vers l'utilisateur, un capot transparent 8 par exemple en matière transparente et résistant aux chocs telle que du polycarbonate, qui permet à l'utilisateur de voir le ruban 3.

Par ailleurs, le dispositif 5 de réglage et de protection est surmonté par une série de fourreaux 9, 10, 11 de section rectangulaire entourant le ruban 3 et pouvant coulisser les uns dans les autres lors du coulissement du dispositif 5. Les fourreaux 9, 10, 11, dont le nombre peut être supérieur à trois, présentent une fente longitudinale 12, qui n'est pas dans le plan de coupe du ruban 3, permettant le passage du ruban 3 lors de son changement. Par ailleurs, pour effectuer ce changement, il suffit d'enlever le capot 8 qui est amovible. Ces fourreaux 9, 10, 11 protègent le ruban 3 dans toute la zone située au-dessus du dispositif.

Comme indiqué sur la figure 1, la colonne 7 de guidage du coulissement du dispositif 5 de réglage et de protection et les organes de transmission du mouvement du levier 6 pour faire coulisser le dispositif 5 sont situés derrière le ruban 3 relativement au côté où se trouve l'utilisateur de la scie.

Ainsi, les organes précités ne constituent aucune gêne pour l'utilisateur.

Le dispositif 5 de réglage et de protection comprend d'autre part une semelle 13 s'étendant parallèlement à la table 1 et portant la partie du dispositif 5 qui entoure le ruban. Le dispositif 5 est relié à la semelle 13 par une glissière 13a parallèle à cette semelle 13 qui permet de régler sa position par rapport à la lame 3.

Cette semelle 13 est fixée à la partie inférieure de la colonne de guidage 7. Cette colonne 7 est montée coulissante dans une douille fixée à un support 19 qui est lui-même fixé au bâti 19a de la scie au moyen de deux colliers 19b.

On voit en outre sur la figure 2, qu'un ressort hélicoïdal 15 de compensation de la masse des parties mobiles du dispositif 5 est monté en compression à l'intérieur de la colonne 7.

Le levier 6 de commande du coulissement du dispositif 5 de réglage et de protection coopère avec deux bras articulés 16, 17 formant un compas. L'extrémité du bras supérieur 16 opposée à l'articulation commune 18 des deux bras 16, 17 est articulée au support 19 de la scie et l'extrémité du bras inférieur 17 opposée à l'articulation commune 18 est articulée à une partie fixe 20 de la semelle 13.

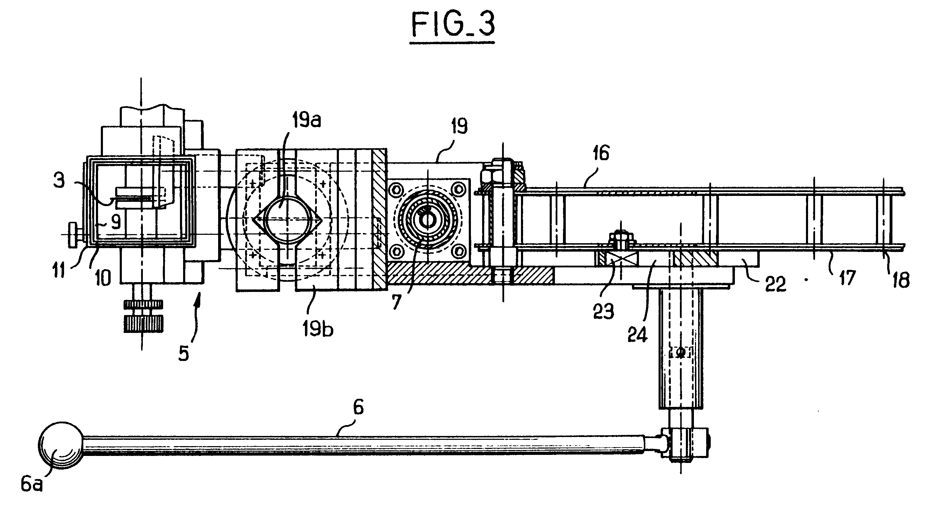

Par ailleurs, le levier de commande 6 est monté pivotant dans un plan perpendiculaire à la table et parallèle aux deux bras 16, 17 formant un compas (voir notamment figure 3).

De plus, l'extrémité du levier de commande 6 opposée à celle 6a destinée à être actionnée par l'utilisateur est articulée suivant un axe 21 fixe par rapport au support 19 de la scie. Cet axe 21 porte une came 22 coopérant avec un galet 23 porté par le bras supérieur 16 pour déplacer les bras 16, 17 l'un par rapport à l'autre sous l'action du levier 6.

Dans la réalisation représentée sur la figure 2, la came 22 est une came desmodromique. Cette came 22 comprend un évidement 24 bordé par deux arcs 25a, 25b espacés sensiblement d'une distance correspondant au diamètre du galet 23.

Les arcs 25a, 25b ont un profil en développante de cercle, en ce sens que la distance entre l'axe de rotation 21 du levier 6 et l'arc inférieur 25a sur lequel s'appuie le galet 23 lorsque le levier 6 est actionné vers le bas, varie progressivement lorsque le galet 23 se déplace sur l'arc précité.

Cette disposition permet à l'utilisateur d'exercer un effort consant sur levier 6 pour modifier la hauteur du dispositif 5 quelle que soit la position de celui-ci.

Dans la position représentée sur la figure 2, le dispositif 5 est en position haute, le levier 6 est sensiblement horizontal, les extrémités des bras 16, 17 opposées à leur articulation commune se touchent et le galet 23 est situé à l'entrée de l'évidement arqué 24 de la came 22.

Sur la figure 1, le dispositif 5 est en position basse. Cette position est atteinte en poussant le levier 6 vers le bas. Lors du pivotement du levier 6 vers le bas, la came 22 pivote en même temps que le levier (voir flèche F sur la figure 2). Ce pivotement fait pivoter le bras supérieur 16 vers le bas du fait de l'engagement du galet 23 dans l'évidement arqué 24 de la came. En même temps, le compas s'ouvre et le bras 17 pousse la semelle 13 vers le bas en faisant coulisser la colonne 7 dans la douille. Le dispositif 5 descend en même temps que la semelle 13. La figure 2 montre en pointillés la position basse des éléments précités.

L'utilisateur arrête l'actionnement du levier 6 lorsque la base 5a du dispositif 5 est espacée de la table 1 d'une distance correspondant à l'épaisseur de la pièce de bois à scier.

Etant donné que le ressort 15 contenu à l'intérieur de la colonne 7 équilibre la masse des parties mobiles du dispositif 5 et que les articulations des bras 16 et 17 sont montées avec friction, la position du dispositif 5 est maintenue stable et ne nécessite aucun verrouillage.

Pour remonter le dispositif 5 vers le haut, il suffit de faire pivoter le levier 6 en sens inverse, c'est-à-dire vers le haut. Ce mouvement est facilité du fait du ressort 15 qui équilibre la masse des parties mobiles du dispositif.

Les principaux avantages du dispositif que l'on vient de décrire sont les suivants :

### Qualités

- compact, à l'arrière de la machine ; dégagement total de la partie avant de la table de travail et du plan horizontal à la base du guide-lame, quel que soit son réglage, sur toute sa course,
- robuste et fiable,
- emploi d'une came desmodromique, pour l'irréversibilité du mouvement de translation, et dont la forme en développante de cercle conduit l'opérateur à exercer un effort de manoeuvre constant, quelle que soit la position réglée à obtenir,
- déplacement rectiligne du guide-lame et de la protection.

### Incidences sur la protection

- protection totale de la partie non utile pour le travail, quelle que soit la hauteur de coupe,
- réglage stable de la hauteur de coupe et du dispositif de protection en une seule opération,
- déplacement du dispositif de protection à l'aide d'un levier de commande qui éloigne les mains de la zone dangereuse,
- intégration de l'équilibrage statique de l'ensemble colonne, guide-lame, protecteurs,
- suppression du dispositif de blocage à hauteur du guide-lame,
- visibilité totale du trait de scie.
- changement de la lame sans démontage du protecteur.

### Montage et adaptation

- intégration du protecteur à la machine,
- adaptation possible sur la plupart des modèles de scie à ruban sans modification importante.

Bien entendu, l'invention n'est pas limitée à l'exemple de réalisation que l'on vient de décrire et on peut apporter à celui-ci de nombreuses modifications sans sortir du cadre de l'invention.

## Revendications

1. Scie à ruban comprenant un dispositif (5) de réglage monté pour pouvoir se déplacer en restant perpendiculaire à l'horizontale, ce dispositif assurant la protection de l'utilisateur et son déplacement étant commandé par un levier (6) actionnable par l'utilisateur, **caractérisée en** ce que la scie à ruban comprend une table (1) munie d'une fente (2) dans laquelle le ruban (3) de la scie est monté de façon à se déplacer perpendiculairement à la surface de la table (1), le dispositif (5) de réglage étant réglable en fonction de l'épaisseur de la pièce à scier et étant monté autour du ruban (3) pour pouvoir coulisser perpendiculairement à la table (1), ce dispositif (5) entourant complètement le ruban (3) pour assurer la protection de l'utilisateur, son coulissement étant guidé par une colonne (7) perpendiculaire à la table (1) et parallèle au ruban (3), en ce que des moyens sont prévus pour maintenir le dispositif (5) de réglage et de protection en position stable en toute position par rapport à la table (1) déterminée par le levier (6) actionné par l'utilisateur, en ce que le dispositif (5) de réglage et de protection comprend une semelle (13) s'étendant parallèlement à la table (1) et portant la partie du dispositif (5) qui entoure le ruban (3), cette semelle (13) étant fixée à la partie inférieure de la colonne (7), cette dernière étant montée coulissante dans une douille, en ce que le levier (6) de commande du coulissement du dispositif (5) de réglage et de protection coopère avec deux bras articulés (16, 17) formant un compas, l'extrémité du bras supérieur (16) opposée à l'articulation commune (18) des deux bras étant articulée au support (19) de la scie et l'extrémité du bras inférieur (17) opposée à l'articulation commune (18) étant articulée à une partie fixe (20) de la semelle (13) et en ce que l'extrémité du levier (6) de commande opposée à celle destinée à être actionnée par l'utilisateur est articulée suivant un axe fixe (21) par rapport au support (19) de la scie, qui porte une came (22) coopérant avec un galet (23) porté par le bras supérieur (16) pour déplacer les bras (16, 17) l'un par rapport à l'autre sous l'action du levier (6).

2. Scie à ruban conforme à la revendication 1, caractérisée en ce que lesdits moyens de maintien comprennent un ressort (15) de compensation de la masse des parties mobiles du dispositif (5) de réglage et de protection et des organes (16, 17) coopérant avec friction lors du déplacement du levier (6).

3. Scie à ruban conforme à l'une des revendications 1 ou 2, caractérisée en ce que le dispositif (5) de réglage et de protection comprend dans sa partie dirigée vers l'utilisateur un capot transparent (8).

4. Scie à ruban conforme à la revendication 3, caractérisée en ce que le dispositif (5) de réglage et de protection est surmonté par une série de fourreaux (9, 10, 11) entourant le ruban (3) et pouvant coulisser les uns dans les autres lors du coulissement du dispositif (5).

5. Scie à ruban conforme à l'une des revendications 1 à 4, caractérisée en ce que la colonne (7) de guidage du coulissement du dispositif (5) de réglage et de protection et les organes (16, 17, 22) de transmission du mouvement du levier (6) pour faire coulisser le dispositif (5) sont situés derrière le ruban (3) relativement au côté où se trouve l'utilisateur de la scie.

6. Scie à ruban conforme à l'une des revendications 1 à 5, caractérisée en ce qu'un ressort (15) hélicoïdal de compensation de la masse des parties mobiles du dispositif (5) est monté en compression à l'intérieur de la colonne (7).

7. Scie à ruban conforme à l'une des revendications 1 à 6, caractérisée en ce que le levier (6) de commande est monté pivotant dans un plan perpendiculaire à la table (1) et parallèle aux bras (16, 17) formant un compas.

8. Scie à ruban conforme à l'une des revendications 1 à 7, caractérisée en ce que la came (22) est une came desmodromique en forme de développement de cercle adaptée pour que l'effort à exercer pour manoeuvrer le levier (6) soit constant sur toute sa course.

9. Scie à ruban conforme à l'une des revendications 1 à 8, caractérisée en ce que les articulations des bras (16, 17) formant le compas comprennent des surfaces de friction.

10. Scie à ruban conforme à la revendication 4, caractérisée en ce que les fourreaux (9, 10, 11) comportent une fente longitudinale (12) et en ce que le capot transparent (8) est amovible, ladite fente (12) et ledit capot (8) étant agencés pour permettre un démontage du ruban (3).

## Patentansprüche

1. Bandsäge mit einer Einstellvorrichtung (5), die so angebracht ist, daß sie verschoben werden und dabei senkrecht zur Horizontalen bleiben kann, wobei diese Vorrichtung den Schutz der Bedienungsperson gewährleistet und ihre Verschiebung durch einen von der Bedienungsperson zu betätigenden Hebel (6) gesteuert ist, dadurch gekennzeichnet, daß die Bandsäge einen Tisch (1) aufweist, der mit einem Schlitz (2) versehen ist, in dem das Band (3) der Säge so angebracht ist, um senkrecht zu der Tischfläche (1) verschoben zu werden, wobei die Einstellvorrichtung (5) in Abhängigkeit von der Dicke des zu sägenden Stückes einstellbar ist und um das Band (3) herum montiert ist, um senkrecht zu dem Tisch (1) verschoben zu werden, wobei diese Vorrichtung (5) das Band (3) vollständig umgibt, um einen Schutz der Bedienungsperson zu gewährleisten, wobei ihre Verschiebung durch einen Säule (7) geführt wird, die senkrecht zu dem Tisch (1) und parallel zu dem Band (3) liegt, daß Mittel zum Halten der Einstell- und Schutzvorrichtung (5) in einer stabilen Lage in jeder durch den von der Bedienungsperson betätigten Hebel (6) bestimmten Position bezüglich des Tisches (1) vorgesehen sind, daß die Einstell- und Schutzvorrichtung (5) einen parallel zum Tisch (1) sich erstreckenden und den das Band (3) umgebenden Teil der Vorrichtung (5) tragenden Querschlitten (13) umfaßt, der am unteren Teil der Säule (7), die in einer Buchse verschiebbar angebracht ist, befestigt ist, daß der Hebel (6) zum Steuern der Verschiebung der Einstell- und Schutzvorrichtung (5) mit zwei einen Zirkel bildenden schwenkbaren Armen (16, 17) zusammenwirkt, wobei das Ende des oberen Arms (16), das der gemeinsamen Schwenkachse (18) der zwei Arme gegenüberliegt, am Träger (19) der Säge angelenkt ist und wobei das Ende des unteren Arms (17), das der gemeinsamen Schwenkachse gegenüberliegt, an einem festen Teil (20) des Querschlittens 13) angelenkt ist, und daß das Ende des Steuerhebels (6), das demjenigen gegenüberliegt, welches für die Betätigung durch die Bedienungsperson vorgesehen ist, um eine in bezug auf den Träger (19) der Säge feste Achse (21) schwenkbar ist, die eine mit einer von dem oberen Arm (16) getragene Rolle (23) zusammenwirkende Nocke (22) trägt, um die Arme (16, 17) unter der Wirkung des Hebels (6) gegenseitig zu verschieben.

2. Bandsäge nach Anspruch 1, dadurch gekennzeichnet, daß die Mittel zum Halten eine Feder (15) zum Ausgleichen der Masse der beweglichen Teile der Einstell- und Schutzvorrichtung (5) und Elemente (16, 17) aufweisen, die während der Verschiebung des Hebels (6) reibschlüssig zusammenwirken.

3. Bandsäge nach einem der Ansprüche 1 oder 2, dadurch gekennzeichnet, daß die Einstell- und Schutzvorrichtung (5) an ihrem zur Bedienungsperson weisenden Teil eine durchsichtige Abdeckhaube (8) aufweist.

4. Bandsäge nach Anspruch 3, dadurch gekennzeichnet, daß die Einstell- und Schutzvorrichtung (5) durch eine Reihe von Hülsen (9, 10, 11) überragt wird, die das Band (3) umgeben und bei der Verschiebunng der Vorrichtung (5) ineinander geschoben werden können.

5. Bandsäge nach einem der Ansprüche 1 bis 4, dadurch gekennzeichnet, daß die Säule (7) zur Führung der Verschiebung der Einstell- und Schutzvorrichtung (5) und die Elemente (16, 17, 22) zur Übertragung der Bewegung des Hebels (6) für die Verschiebung der Vorrichtung (5) in bezug auf die Seite, auf der sich die Bedienungsperson der Säge befindet, hinter dem Band (3) angeordnet sind.

6. Bandsäge nach einem der Ansprüche 1 bis 5, dadurch gekennzeichnet, daß eine Spiralfeder (15) zum Ausgleichen der Masse der beweglichen Teile der Vorrichtung (5) zusammengedrückt im Inneren der Säule (7) angebracht ist.

7. Bandsäge nach einem der Ansprüche 1 bis 6, dadurch gekennzeichnet, daß der Steuerhebel (6) in einer zum Tisch (1) senkrechten und zu den einen Zirkel bildenden Armen (16, 17) parallelen Ebene schwenkbar angebracht ist.

8. Bandsäge nach einem der Ansprüche 1 bis 7, dadurch gekennzeichnet, daß die Nocke (22) eine desmodromische Nocke in Form einer Kreisabwicklung ist und so ausgebildet ist, daß die Kraft, die zum Bewegen des Hebels (6) ausgeübt wird, während ihres gesamten Hubs konstant ist.

9. Bandsäge nach einem der Ansprüche 1 bis 8, dadurch gekennzeichnet, daß die Schwenkachsen der den Zirkel bildenden Arme (16, 17) Reiboberflächen umfassen.

10. Bandsäge nach Anspruch 4, dadurch gekennzeichnet, daß die Hülsen (9, 10, 11) einen Längsschlitz (12) aufweisen und daß die durchsichtige Abdeckhaube (8) abnehmbar ist, wobei der Schlitz (12) und die Abdeckhaube (8) so angeordnet sind, daß sie einen Ausbau des Bandes (3) zulassen.

## Claims

1. A band saw comprising a control device (5) mounted for displacement while remaining perpendicular to the horizontal, said device protecting the user and its displacement being effected by a lever (6) adapted to be actuated by the user, characterised in that the band saw comprises a table (1) formed with a slot (2) in which the band (3) is mounted for displacement perpendicularly to the surface of the table (1), the control device (5) being adjustable in dependence on the thickness of the workpiece and being mounted around the band (3) so as to slide perpendicularly to the table (1), said device (5) completely surrounding the band (3) in order to protect the user, its sliding being guided by a column (7) perpendicular to the table (1) and parallel to the band (3), in that means are provided to hold the control and protective device (5) in a stable position in any position with respect to the table (1) as determined by the lever (6) actuated by the user, in that the control and protective device (5) comprises a base plate (13) extending parallel to the table (1) and bearing that part of the device (5) which surrounds the band (3), said base plate (13) being fixed to the bottom part of the column (7), the latter being slidable in a bush, in that the lever (6) controlling the sliding of the control and protective device (5) co-operates with two articulated arms (16, 17) forming a caliper, the end of the top arm (16) remote from the common articulation (18) of the two arms being articulated to the saw support (19) and the end of the bottom arm (17) remote from the common articulation (18) being articulated to a fixed part (20) of the base plate (13) and in that the end of the control lever (6) remote from that intended for actuation by the user is articulated along a fixed axis (21) with respect to the saw support (19), which bears a cam (22) co-operating with a roller (23) borne by the top arm (16) to move the arms (16, 17) relatively to one another in response to the action of the lever (6).

2. A band saw according to claim 1, characterised in that the said holding means comprise a spring (15) to compensate for the mass of the moving parts of the control and protective device (5) and elements (16, 17) co-operating with friction on displacement of the lever (6).

3. A band saw according to claim 1 or 2, characterised in that the control and protective device (5) comprises a transparent cap (8) in its part facing the user.

4. A band saw according to claim 3, characterised in that the control and protective device (5) is surmounted by a series of sleeves (9, 10, 11) surrounding the band (3) and slidable in one another on sliding of the device (5).

5. A band saw according to any one of claims 1 to 4, characterised in that the column (7) guiding the sliding of the control and protective device (5) and the elements (16, 17, 22) for transmitting the movement of the lever (6) to cause the device (5) to slide are situated behind the band (3) relatively to the side on which the saw user is situated.

6. A band saw according to any one of claims 1 to 5, characterised in that a helical spring (15) compensating the mass of the moving parts of the device (5) is mounted under compression inside the column (7).

7. A band saw according to any one of claims 1 to 6, characterised in that the control lever (6) is mounted pivotally in a plane perpendicular to the table (1) and parallel to the caliper arms (16, 17).

8. A band saw according to any one of claims 1 to 7, characterised in that the cam (22) is a positive cam in the form of a development of a circle so adapted that the force to be exerted to operate the lever (6) is constant over its entire travel.

9. A band saw according to any one of claims 1 to 8, characterised in that the articulations of the caliper arms (16, 17) comprise friction surfaces.

10. A band saw according to claim 4, characterised in that the sleeves (9, 10, 11) are formed with a longitudinal slot (12) and in that the transparent cap (8) is detachable, the said slot (12) and the said cap (8) being arranged to allow removal of the band (3).
